## Europäisches Patentamt
## European Patent Office
## Office européen des brevets

(11) Veröffentlichungsnummer: **0 158 335 B1**

(12) **EUROPÄISCHE PATENTSCHRIFT**

(45) Veröffentlichungstag der Patentschrift: **07.08.91**

(51) Int. Cl.⁵: **A01C 17/00**

(21) Anmeldenummer: **85104317.4**

(22) Anmeldetag: **10.04.85**

(54) Verfahren und Schleuderstreuer zum Verteilen von Düngemitteln.

(30) Priorität: **13.04.84 DE 3413944**

(43) Veröffentlichungstag der Anmeldung:
**16.10.85 Patentblatt 85/42**

(45) Bekanntmachung des Hinweises auf die
Patenterteilung:
**07.08.91 Patentblatt 91/32**

(84) Benannte Vertragsstaaten:
**AT BE CH DE FR GB IT LI LU NL SE**

(56) Entgegenhaltungen:
EP-A- 0 017 128      EP-A- 0 127 922
DE-A- 2 407 085      FR-A- 826 901
GB-A- 995 614        GB-A- 1 045 370
GB-A- 1 049 352      GB-A- 2 064 283
US-A- 2 992 008      US-A- 3 017 189

(73) Patentinhaber: **Amazonen-Werke H. Dreyer
GmbH & Co. KG
Postfach 51
W-4507 Hasbergen-Gaste(DE)**

(72) Erfinder: **Dreyer, Heinz, Dr.**

**W-4507 Hasbergen(DE)**

(74) Vertreter: **Patentanwälte Grünecker, Kinkeldey, Stockmair & Partner
Maximilianstrasse 58
W-8000 München 22(DE)**

## Beschreibung

Die Erfindung betrifft einen Schleuderstreuer gemäß dem Oberbegriff, des Anspruches 1.

Ein derartige Schleuderstreuer ist aus der DE-OS 28 05879 bekannt. Bei diesem Schleuderstreuer können die äußeren Teile der Wurfelemente in aufrechter Ebene verschwenkt werden, wodurch unterschiedliche Abwurfwinkel für die abgeschleuderten Düngemittelpartikel erzielt werden. Der bekannte Schleuderstreuer ist sowohl für die Normaldüngung als auch für die spätere Verteilung der Düngemittel über bereits höher aufgewachsene Pflanzen, die sogenannte Spätdüngung, geeignet. Für den Einsatz des Schleuderstreuers bei der Normaldüngung werden die äußeren Teile der Wurfelemente so eingestellt, daß sie in einem relativ kleinen Winkel zur Horizontalen nach oben gerichtet sind. Beim Einsatz des Schleuderstreuers für die Spätdüngung werden die äußeren Teile in einem größeren Winkel zur Horizontalen nach oben eingestellt. Infolge dieser Maßnahmen kann die Wurfweite der Düngerpartikel und damit die effektive Streubreite des Schleuderstreuers verändert werden. Damit ist auch die Anpassung der Streubreite innerhalb des sogenannten Fahrgassenverfahrens nicht nur an die Arbeitsbreite der zuvor eingesetzten Bestellmaschinen, sondern grundsätzlich an die unterschiedlichen Abstände der Wurfelemente von den zu bestreuenden Oberflächen und an die unterschiedlichen Streuzustände der einzelnen Düngemittelsorten möglich. Die Einsetzbarkeit des Schleuderstreuers sowohl für die Normaldüngung, der Spätdüngung als auch des Fahrgassenverfahrens wird mit einfachsten Mitteln erreicht. So ist aus der DE-OS 28 05 879 ein weiterer Schleuderstreuer bekannt, bei welchem die Wurfelemente gegen Wurfelemente mit anderen Einstellwinkeln austauschbar sind. Somit können in einfacher Weise Wurfelemente für die Normalstreuung gegen solche für die Spätstreuung ausgetauscht werden.

Obwohl dieser Schleuderstreuer in der Feldmitte für eine gleichmäßige Bestreuung sorgt, ist das Bestreuen von Feldrandstreifen noch unvollkommen. Will man nämlich bis zum Feldrand eine gleichbleibende Streustärke beibehalten, so streut der Schleuderstreuer den Dünger über den Feldrand hinaus auf angrenzende Wege oder Gräben. Will man dies vermeiden, so muß man in Kauf nehmen, daß der Feldrandstreifen mit einer abnehmenden Streustärke bestreut wird. Das Bestreuen der Feldrandstreifen wird auch als Grenzstreuen bezeichnet.

Neben dem erwähnten Schleuderstreuer ist durch die DE-OS 29 13 738 bzw die EP-17128 ein Schleuderstreuer zum Grenzstreuen bekanntgeworden, mit welchem Feldrandstreifen bis zum Feldrand mit gleichbleibender Streustärke bestreut werden können, ohne daß Dünger über den Feldrand hinausgeworfen wird.

Gleichwohl kann auch dieser Schleuderstreuer nicht ganz befriedigen, da zum Bestreuen der Feldrandstreifen mehrere Einstelländerungen vorgenommen werden müssen. So muß der Einstellwinkel der äußeren Teile der Wurfelemente zur Horizontalen und gleichzeitig die Entfernung der äußeren Kanten der äußeren Teile der Wurfelemente verringert werden. Auch der Anstellwinkel der Wurfelemente ist dabei zu verändern. Nach Beendigung des Feldrandbestreuens muß der Landwirt die äußeren Teile wieder umstellen. Diese Arbeiten sind aufwendig, benötigen spezielles Werkzeug und kosten Zeit. Nach längerer Einsatzzeit des Schleuderstreuers sind die Einstellschrauben nicht mehr oder nur noch mit großer Mühe zu lösen. Dies trifft vor allem auf die Einstellschrauben zu, mit denen der Abstand der äußeren Teile der Wurfelemente zur Rotationsachse verändert werden soll.

In der nachveröffentlichten europäischen Patentanmeldung 01 27 922, die nach Art. 54, 3 und 4 für die Länder Österreich, Belgien, Schweiz, Italien, Liechtenstein und Schweden als Stand der Technik gilt, wird vorgeschlagen, zum Grenzstreuen den gesamten Schleuderdüngerstreuer bezüglich der Horizontalen zu neigen, was einen beträchtlichen Konstruktionsaufwand erfordert.

Aus der GB-A-995 614 ist es bekannt, im Umfangsbereich einer Schleuderscheibe auf- und abschwenkbare Ablenkplatten anzuordnen, die jedoch feststehend angeordnet sind, also die Drehbewegung der Schleuderscheiben nicht mit ausführen.

Aus der DE-A-2 407 085 ist es bekannt, Wurfelemente auf einer Schleuderscheibe so zu konstruieren, daß sie einen Teil des abgeschleuderten Düngemittelstroms zur Horizontalen nach oben und einen anderen Teil zur Horizontalen nach unten geneigt abgeben. Die beiden Teilströme werden in getrennten Kanälen gesammelt und zum Reihenstreuen bis unmittelbar über den Boden mit entsprechenden Leitungen weitergeführt.

Der Erfindung liegt die Aufgabe zugrunde, einen Schleuderstreuer gemäß der eingangs genannten Art derart zu verbessern, daß bei dem Bestreuen von Feldrandstreifen an den Feldrändern eine steil abfallende Streustärke erreicht wird, so daß der Dünger in gleichbleibender Streustärke an den Feldrand geworfen wird, ohne daß dadurch der Aufbau des Schleuderstreuers komplizierter wird.

Diese Aufgabe wird mit einen Schleuderstreuer mit den Merkmalen des Anspruchs 1 gelöst. Infolge dieser Maßnahme wird in unerwartet einfacher Weise erreicht, daß der Dünger in gleichmäßiger Streustärke bis an den Feldrand geworfen wird. Die Düngemittelpartikel werden in einer äußerst flachen Wurfparabel gezielt und direkt in Richtung des Feldrandes geworfen. Hierdurch wird sichergestellt, daß auch bei Seitenwind die Düngemittelpartikel bis an den Feldrand heran bzw.nicht über den Feldrand hinaus geschleudert werden.

Dabei ist es besonders vorteilhaft, daß ein oberer Teil des Düngemittelstromes nach unten abgelenkt wird. Dadurch findet eine gezielte Ablenkung der abzuschleudernden Düngemittelpartikel statt, so daß am Feldrand eine besonders steil abfallende Streustärke erreicht wird.

In einer bevorzugten Ausführungsform ist vorgesehen daß die obere Leitfläche des äußeren Teils über ein Gelenk mit dem inneren Teil des jeweiligen Wurfelements verbunden ist.

Bei einer platzsparenden Anordnung der Schleuderscheiben, bei der die Schleuderscheiben dicht aneinandergerückt sind, ist es vorteilhaft, daß die Schleuderscheiben Aussparungen aufweisen, in die die nach unten verschwenkten, bzw. weisenden Teile der Wurfelemente der jeweils anderen Schleuderscheibe in der Grenzstreustellung fassen.

Wenn die Wurfelemente auf der Streuscheibe aufliegen und nicht über diese hinausragen, ist es vorteilhaft, daß unterhalb der nach unten zu verschwenkenden bzw. bringbaren Teile der Wurfelemente Einprägungen nach unten bzw. Ausschnitte in den Schleuderscheiben vorgesehen sind.

Im folgenden werden einige Ausführungsbeispiele der Erfindung anhand von Zeichnungen näher erläutert. Es zeigen:

Fig. 1     einen Schleuderstreuer in der Ansicht von hinten mit einem von der Streueinrichtung für die Normaldüngung erzeugten Streubild,

Fig. 2     den gleichen Schleuderstreuer in der Ansicht von hinten mit einem von der Streueinrichtung für die Spätdüngung erzeugten Streubild,

Fig. 3     den gleichen Schleuderstreuer in der Ansicht von hinten mit einem von der Streueinrichtung für das Feldrandbestreuen erzeugten Grenzstreubild,

Fig. 4     die Streueinrichtung des Schleuderstreuers in Prinzipdarstellung in der Ansicht von hinten,

Fig. 5     ein Wurfelement der Streueinrichtung mit für die Normaldüngung eingestelltem äußeren Teil in der Ansicht von hinten,

Fig. 6     das Wurfelement gem. Fig. 5, wobei das äußere Teil des Wurfelementes für die Spätdüngung eingestellt ist,

Fig. 7     das Wurfelement gem. Fig. 5, wobei das äußere Teil des Wurfelementes für das Feldrandbestreuen eingestellt ist,

Fig. 8     ein weiteres Wurfelement in der Ansicht von hinten, wobei die äußeren Teile des Wurfelementes für die Normaldüngung eingestellt sind,

Fig. 9     das Wurfelement gem. Fig. 8, wobei die äußeren Teile des Wurfelementes für die Spätdüngung eingestellt sind,

Fig. 10     das Wurfelement gem. Fig. 8, wobei die äußeren Teile des Wurfelementes für das Feldrandbestreuen eingestellt sind,

Fig. 11     eine erfindungsgemäße Schleuderscheibe mit erfindungsgemäßen Wurfelementen in der Draufsicht,

Fig. 12     die Schleuderscheibe nach Fig. 11 im Schnitt XII-XII,

Fig. 13     ein erfindungsgemäßen Wurfelement gem. Fig. 11 für die Normaldüngung in Seitenansicht,

Fig. 14     ein weiteres erfindungsgemäßes Wurfelement gem. Fig. 11 für die Spätdüngung in Seitenansicht und

Fig. 15     ein anderes erfindungsgemäßes Wurfelement gemäß Fig. 11 für das Grenzstreuen,

Fig. 16     eine erfindungsgemäße Schleuderscheibe mit erfindungsgemäßen Wurfelementen in der Draufsicht,

Fig. 17     die Schleuderscheibe gem. Fig. 16 in der Ansicht XVII-XVII,

Fig. 18     zwei dicht aneinanderliegende Schleuderscheiben einer weiteren Ausführungsform des erfindungsgemässen Schleuderstreuers in der Draufsicht.

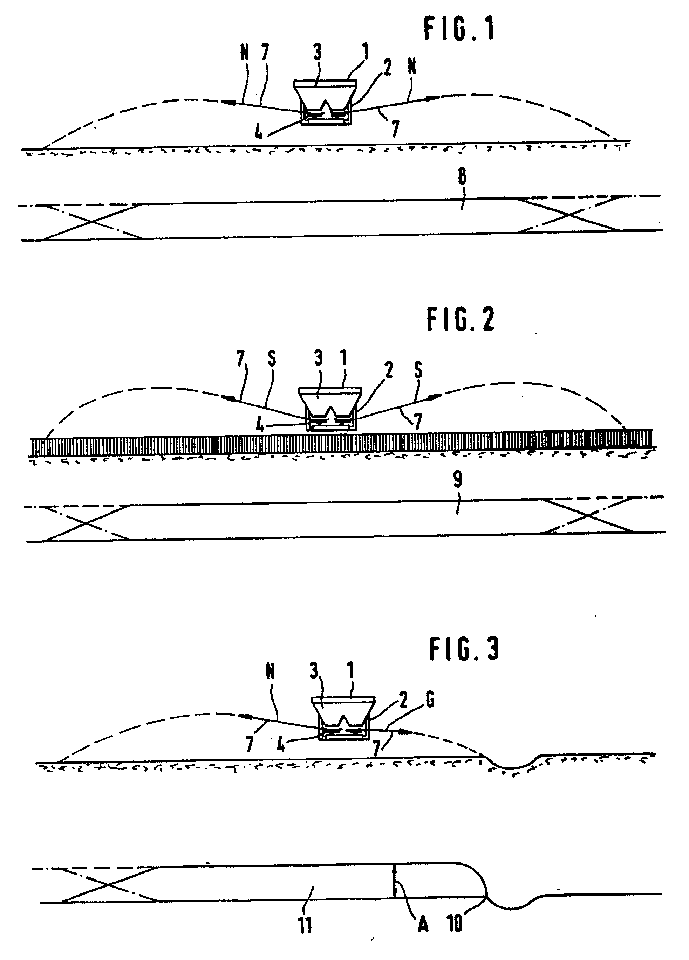

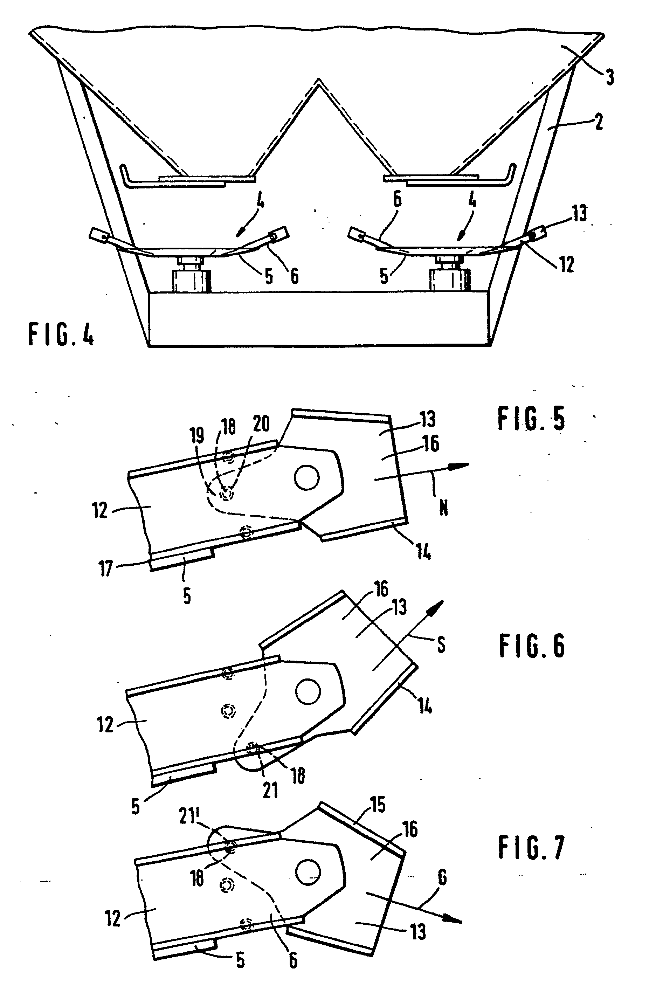

Die in den Fig. 1, 2 und 3 dargestellten Schleuderstreuer 1 sind mit einem Rahmen 2 und einem in seinem unteren Bereich zweigeteilten Vorratsbehälter 3 ausgestattet, unter dem sich die Streueinrichtung 4 befindet. Diese Streueinrichtung 4 besteht aus den beiden rotierend angetriebenen Schleuderscheiben 5, auf denen die Wurfelemente 6, wie aus Fig. 4 ersichtlich, angeordnet sind. Die aus dem Vorratsbehälter 3 auf die Schleuderscheiben 5 fallenden Düngemittel werden in Richtung der Pfeile 7 unter einem Abwurfwinkel in einem Halbkreis seitlich und nach hinten abgeschleudert, wobei die Düngemittelpartikel Wurfparabeln, die mit gestrichelten Linien angedeutet sind, beschreiben. Je nachdem mit welchen Abwurfwinkeln die Düngemittelpartikel von den Schleuderscheiben 5 bzw. den Wurfelementen 6 abgeschleudert werden, entstehen verschiedene Streubilder für verschiedene Einsatzzwecke. In Fig. 1 ist der Abwurfwinkel der Wurfelemente 6 so eingestellt, daß das für die Normaldüngung geeignete Streubild 8 von den abgeschleuderten Düngemittelpartikeln erzeugt wird, während bei dem Schleuderstreuer in Fig. 2 für den Einsatz bei der Spätdüngung der Abwurfwinkel der Wurfelemente 6 größer als bei der Normaldüngung entsprechend Fig. 1 eingestellt ist, so daß das Streubild 9 von den abgeschleuderten Düngemittelpartikeln geschaffen wird. Bei dem Einsatzfall gem. Fig. 3, bei dem mit dem Schleuderstreuer 1 Feldrandstreifen so bestreut werden sollen, daß die Düngemittelpartikel bis an den Feldrand 10 in gleichbleibender Streustärke herangeworfen werden, sind die Wurfelemente 6 auf der dem Feldrand 10 nächstliegenden Schleuderscheibe 5 so eingestellt, daß die Düngemittelpartikel in eine Richtung abgeschleudert werden, die unterhalb der Normalstreurichtung liegt. Hierdurch entsteht das Grenzstreubild 11 mit der zu dem Feldrand steil abfallenden Streustärke. Die Wurfelemente 6 bestehen jeweils aus dem fest auf die Schleuderscheibe 5 aufgeschraubten inneren Teil 12 und den an den inneren Teil 12 in aufrechter Ebene schwenkbar angeordneten äußeren Teil 13. Die inneren Teile 12 und die äußeren Teile 13 sind über eine aus der DE-OS 29 49 224 bekannten reibschlüssigen Verbindung miteinander verbunden, so daß sie allein mittels Handkraft in verschiedene festgelegte Stellungen einzustellen sind. Die äußeren Teile 13 weisen die untere Leitfläche 14 und die obere Leitfläche 15 auf, die durch den senkrechten Steg 16 zu einem im Querschnitt U-förmigen äußeren Teil 13 verbunden sind.

Entsprechend der Einstellung des äußeren Teiles 13 des Wurfelementes 6 gemäß Fig. 5 ist die untere Leitfläche 14 des äußeren Teiles 13 parallel zu der Schleuderscheibenoberfläche der Schleuderscheibe 5 eingestellt. Diese Position des äußeren Teiles 13 ist für die Normaldüngung vorgesehen, so daß das Streubild 8 entsprechend der Fig.1 erzeugt wird, wobei die Düngemittelpartikel in Richtung N abgeschleudert werden. In dieser Normaldüngungsstellung des äußeren Teiles 13 des Wurfelementes 6 rastet der als Anschlag wirkende Stift 18, der an dem verlängerten Stück 19 des Steges 16 befestigt ist, in das Rastloch 20 ein. Somit wird durch das Rastloch 20 die Normaldüngungsstellung des äußeren Teiles 13 genau festgelegt.

Um mit dem Schleuderstreuer 1 die Spätdüngung gem. der Fig. 2 durchführen zu können, wird der äußere Teil 13 des Wurfelementes 6 in die in Fig. 6 dargestellte Stellung geschwenkt, so daß die Düngemittelpartikel mit einem größeren Abwurfwinkel abgeschleudert werden, der von der nach oben geschwenkten unteren Leitfläche 14 bestimmt wird. In dieser Spätdüngungsstellung des äußeren Teiles 13 rastet der Stift 18 in das Rastloch 21 ein. Die Düngepartikel werden jetzt in Richtung S von den Wurfelementen 6 abgeschleudert.

Wenn der Schleuderstreuer 1 für das Feldrandbestreuen gem. der Fig. 3 eingerichtet werden muß, sind lediglich die äusseren Teile 13 der Wurfelemente 6 die auf der dem Feldrand 10 nächstliegenden Schleuderscheibe 5 angeordnet sind, in die der Spätdüngungsstellung gem. Fig. 6 entgegengesetzten Richtung über die Normaldüngungsstellung gem. Fig. 5 hinausgehende Stellung entsprechend der Fig. 7 zu schwenken, so daß die von den Wurfelementen 6 abgeschleuderten Düngemittelpartikel in einer unterhalb der Normalstreurichtung N liegenden Richtung G abgeschleudert werden. Hierbei wird die obere Leitfläche 15 des äußeren Teiles 13 des Wurfelementes 6 in den von den inneren Teilen 12 der Wurfelemente abgeschleuderten Düngemittelstrom hineinbewegt, wobei der Stift 18 in das Rastloch 21 einrastet. Somit werden die Düngemittelpartikel von dieser Schleuderscheibe 5 bzw. deren Wurfelementen 6 in einer Weise abgeschleudert, wie es in der rechten Hälfte der Abbildung in Fig. 3 dargestellt ist, so daß die Düngemittelpartikel in gleichbleibender Streustärke A bis an die Feldrandgrenze 10 geworfen werden. Hierbei ist es von Bedeutung, daß vor allem die an sich weit über den Feldrand 10 hinausfliegenden Düngemittelpartikel in einer derartigen Weise von der oberen Leitfläche 15 des Wurfelementes 16 abgelenkt werden, daß sie nicht über den Feldrand 10 hinausgeschleudert werden, d.h. also die obere Leitfläche 15 erteilt den Düngemittelpartikeln eine direkte Bewegungsrichtung in Richtung der zu bestreuenden Fläche innerhalb des dem Feldrand 10 begrenzten Bereiches.

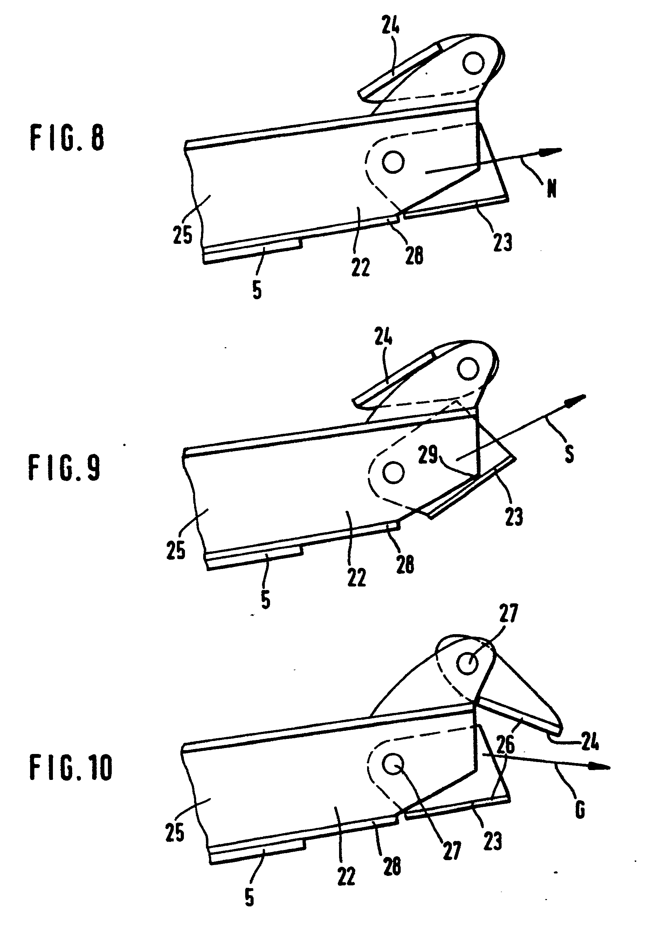

Bei dem Ausführungsbeispiel der Wurfelemente 22 entsprechend den Fig. 8, 9 und 10 ist die untere Leitfläche 23 unabhängig von der oberen Leitfläche 24 zu verschwenken. Das Wurfelement 22 besteht aus dem inneren Teil 25, welches fest auf der Schleuderscheibe 5 angeschraubt ist und den aus den Leitflächen 23 und 24 bestehenden äußeren Teilen 26. Die äusseren Teile 26 sind jeweils über ein Gelenk 27, welches eine reibschlüssige Verbindung zwischen dem inneren Teil 25 und dem äußeren Teil 26 gewährleistet, miteinander verbunden. Gemäß der Darstellung in Fig. 8 befinden sich die äußeren Teile 26 in den für die Normaldüngung vorgesehenen Stellungen. Die untere Leitfläche 23 befindet sich in der parallelen Lage zu der unteren Leitfläche 28 des inneren Teiles 25, während die obere Leitfläche 24 zurückgeschwenkt ist und nicht in den von den Wurfelementen 22 abgeschleuderten Düngerstrom hineinragt. Somit werden die Düngemittelpartikel in Richtung N abgeschleudert.

Um die Spätdüngung durchzuführen, wird die untere Leitfläche 23 des äußeren Teiles 26 des Wurfelementes 22 in die in Fig. 9 dargestellte Position geschwenkt. Diese Position wird durch den von der Schräge 29 gebildeten Anschlag bestimmt, wobei die untere Leitfläche 23 an der Schräge 29 zur Anlage kommt. Bei der Durchführung der Spätdüngung ist die obere Leitfläche 24 ebenfalls zurückgeschwenkt, so daß sie nicht in den von den Wurfelementen 22 abgeschleuderten Düngerstrom hineinragt. Hierdurch werden die Düngemittelpartikel in Richtung S von den Wurfelementen 22 abgeschleudert.

Sollen mit dem Schleuderstreuer Feldrandstreifen bestreut werden, so wird die untere Leitfläche 23 der äußeren Teile 26 des Wurfelementes 22 in die der Normaldüngung entsprechende Position geschwenkt. Weiterhin wird die obere Leitfläche 24 des äußeren Teiles 26 des Wurfelementes 22 in die in Fig. 10 dargestellte Position geschwenkt, so daß sie in den von den Wurfelementen 22 abgeschleuderten Düngerstrom hineinragt. Hierbei nimmt die obere Leitfläche 24 eine derartige Stellung ein, daß sie die abgeschleuderten Düngemittelpartikel nach unten ablenkt; d.h. also die obere Leitfläche 24 drückt die Wurfbahn bzw. Wurfparabel, die die abgeschleuderten Düngemittelpartikel durchfliegen, gegenüber den Wurfbahnen bei der Spätdüngung bzw. Normaldüngung nach unten, so daß die Düngemittelpartikel bei dem Bestreuen von Feldrandstreifen in gleichmäßiger Streustärke A bis an den Feldrand 10 geworfen werden. Die Düngemittelpartikel werden somit im Bereich des Feldrandes in Richtung G von den Wurfelementen 22 abgeschleudert.

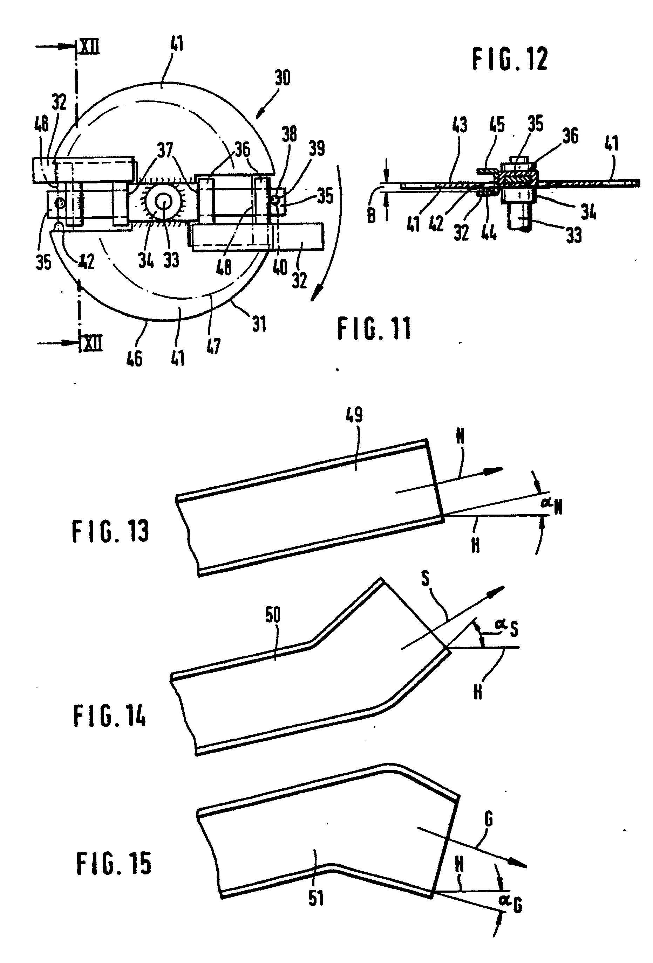

Die Fig. 11 und 12 zeigen eine weitere Ausführung einer Streueinrichtung 30 eines Schleuderstreuers mit der Schleuderscheibe 31 in aufgelöster Bauweise mit Wurfelementen 32. Die Wurfelemente 32 werden mit Hilfe einer Welle 33 in bekannter Weise von der Schlepperzapfwelle angetrieben. Auf der Welle 33 ist die Nabe 34 drehfest montiert. An der Nabe 34 sind die beiden Aufnahmeelemente 35, die als an der Nabe 34 angeschweißte Flacheisen ausgebildet sind, angeordnet. An diesen Aufnahmeelementen 35 sind die beiden Wurfelemente 32 mittels der an den Wurfelementen 32 angebrachten Aufnahmeösen 36, die den gleichen Querschnitt wie die Flacheisen 35 aufweisen, befestigt. Die Wurfelemente 32 weisen im Vergleich zueinander unterschiedliche Längen auf; d.h. die äußeren Enden der Wurfelemente 32 befinden sich in unterschiedlicher Entfernung von der Welle 33. Die Wurfelemente 32 sind jeweils von außen leicht mit ihren Aufnahmeösen 35 auf die Aufnahmeelemente 35 zu schieben, bis die inneren Aufnahmeösen 36 an den an den Aufnahmeelementen 35 angeordneten Anschlägen 37 zur Anlage kommen. Die Wurfelemente 32 werden jeweils mit dem als Schnellverschluß 38 ausgebildeten Vorstecker 39, der in ein sich in dem Flacheisen befindliches Loch 20 gesteckt wird, auf dem Flacheisen 35 gesichert. Nach Lösen dieser Schnellverschlüsse 38 können die Wurfelemente 32 jeweils einfach von den Aufnahmeelementen gelöst und abgenommen bzw. wieder einfach auf den Aufnahmeelementen befestigt werden.

In Höhe der Wurfelemente 32 sind an der Nabe 34 zwischen den einzelnen Wurfelementen 32 die Abdeckscheiben 41 der Schleuderscheibe 31 angeordnet, die in dem Bereich der Wurfelemente 32 die Aussparung 42 aufweisen. Die Wurfelemente 32 befinden sich also in dem Bereich der Aussparung 42. Die Oberfläche 43 der Abdeckscheiben 41 befindet sich jeweils in einem kleinen Abstand B oberhalb der unteren Leitfläche 44 des jeweiligen Wurfelementes 32, damit die Düngemittelpartikel zu den Wurfelementen 32 gelangen. Weiterhin befindet sich die Oberfläche 43 der Abdeckscheibe 41 jeweils unterhalb der oberen Leitfläche 45 des jeweiligen Wurfelementes 32. Die Abdeckscheiben 41 weisen den kreisbogenförmigen Rand 46 auf. Es ist jedoch auch möglich, daß aus gewichtssparenden Gründen, die Abdeckscheibe 41 die die mit strichpunktierten Linien eingezeichnete Kontur 47 aufweist, die etwa dem von den Düngemittelpartikeln auf der Abdeckscheibe 41 zurückgelegten Weg entspricht.

Damit für die Abdeckscheiben 41 ein ruhiger Rundumlauf gewährleistet ist, kann erforderlichenfalls eine mit strichpunktierten Linien angedeutete Verbindungsstrebe 48 im Bereich der Aussparungen 42 zwischen den Teilen der Abdeckscheiben 41 angeordnet sein, so daß zumindest im äußeren Bereich von den Abdeckscheiben 41 wieder eine geschlossene Schleuderscheibe gebildet wird.

Wie oben beschrieben, können in einfacher Weise die Wurfelemente 32 mit Hilfe der Aufnahmeelemente 35, der Aufnahmeösen 36 und des Schnellverschlusses 38 von der Nabe 34 der Streueinrichtung 30 gelöst und somit gegen andere Wurfelemente mit anderen Einstellungen der Abwurfwinkel ausgetauscht werden.

Wenn der Schleuderstreuer für die Normaldüngung entsprechend Fig. 1 eingesetzt werden soll, werden an der Streueinrichtung 30 die in Fig. 13 dargestellten Wurfelemente 49, wie oben beschrieben, montiert. Diese Wurfelemente 49 schleudern die Düngemittelpartikel in Richtung N, die der Normalstreurichtung entspricht, ab. Die Wurfelemente 49, die für die Normaldüngung vorgesehen sind, weisen zur Horizontalen H den Winkel $\alpha_N$ auf.

Wenn der Schleuderstreuer für die Spätdüngung entsprechend Fig. 2 eingesetzt werden soll, werden an der Streueinrichtung 30 die in Fig. 14 dargestellten Wurfelemente 50, wie oben beschrieben, montiert. Diese Wurfelemente 50 schleudern die Düngemittelpartikel in Richtung S, die der Spätdüngungsstreurichtung S entspricht, ab. Die Wurfelemente 50, die für die Spätdüngung vorgesehen sind, weisen zur Horizontalen H den Winkel $\alpha_S$ auf.

Wenn der Schleuderstreuer für das Bestreuen von Feldrandstreifen entsprechend Fig. 3 eingesetzt werden soll, werden an der Streueinrichtung 30 - bei einem Zweischeibenbestreuer nur an der dem Feldrand zugewandten Streueinrichtung 30 - die in Fig. 15 dargestellten Wurfelemente 51 wie oben beschrieben montiert. Diese Wurfelemente 51 schleudern die Düngemittelpartikel in Richtung G, die der Grenzstreurichtung G entspricht. Die Wurfelemente 51, die für das Grenz- bzw. Feldrandbestreuen vorgesehen sind, weisen zur Horizontalen H den Winkel $\alpha_G$ auf, so daß die Grenzstreurichtung G unterhalb der Normalstreurichtung N liegt.

Damit die verschiedenen Wurfelemente 49, 50, 51 sich jeweils am Einsatzort des Schleuderstreuers befinden und nicht verlorengehen, sind an dem Schleuderstreuer in nicht dargestellter Weise Halterungen für die Anahme dieser Wurfelemente vorgesehen.

Es sei noch darauf hingewiesen, daß bei einem Zweischeibenschleuderstreuer mit zwei in einem Abstand nebeneinander angeordneten Schleuderscheiben jeweils nur bei den Wurfelementen, die die Düngemittel in Richtung des Feldrandes werfen, der Abwurfwinkel bzw. die Richtung, in der die Düngemittelpartikel abgeschleudert werden, verändert werden muß.

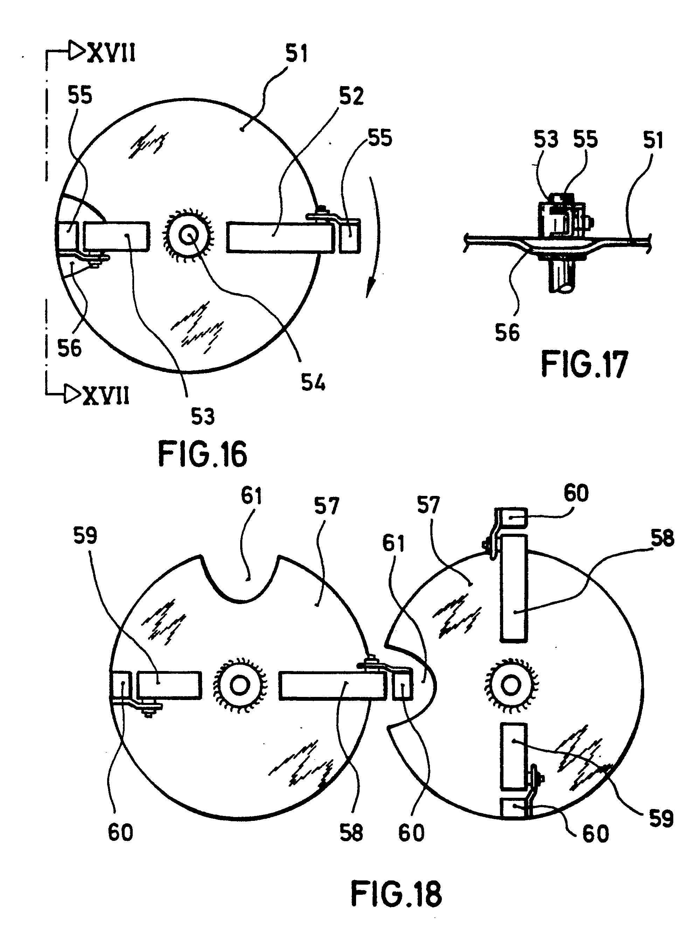

Eine weitere Ausführungsform wird in den Fig. 16 und 17 gezeigt. Die Schleuderscheibe 51 weist ein längeres Wurfelement 52 und ein kürzeres Wurfelement 53 auf, welche mit Schrauben an der Schleuderscheibe 51 befestigt sind. Die Schleuderscheibe 51 ist mit ihrer Nabe auf der Schleuderscheibenantriebswelle 54 zu befestigen. Die Wurfelemente 52 und 53 weisen jeweils an ihrem äußeren Ende die verschwenkbaren äußeren Teile 55 auf. Die äußeren verschwenkbaren Teile 55 sind sowohl nach oben in eine Spätdüngungsstellung als nach unten in ein Grenzstreustellung zu verschwenken. Damit der äußere Teil 55 des kürzeren Wurfelementes 53, welcher sich noch im Bereich der Schleuderscheibe 51 befindet, nach unten verschwenkt werden kann, ist unterhalb des Wurfelementes 53 im äußeren Bereich der Schleuderscheibe 51 die Einprägung 56 in der Schleuderscheibe 51 angeordnet. Anstatt der Einprägung 56 kann in diesem Bereich auch ein Ausschnitt in der Schleuderscheibe 51 vorgesehen sein.

Die Fig. 18 zeigt zwei sehr dicht nebeneinander liegende Schleuderscheiben 57 eines Zweischeibendüngerstreuers. Auf diesen Schleuderscheiben 57 sind jeweils ein längeres Wurfelement 58 und ein kürzeres Wurfelement 59 befestigt. Die Wurfelemente 58 und 59 weisen jeweils gegenüber den inneren Teilen der Wurfelemente verschwenkbare äußere Teile 60 auf. Damit in nach unten geschwenkter Stellung der äußeren Teile 60 diese nicht mit den Schleuderscheiben 57 zusammenstoßen, sind an den entsprechenden Stellen der Schleuderscheiben 57 Aussparungen 61 angeordnet, in die die äußeren Teile 60 der jeweils anderen Streuscheibe in ihrer nach unten für die Grenzstreuung geschwenkten Stellung fassen.

Die äußeren Teile 60 können entweder einstückig oder zweistückig ausgebildet werden, wobei dann die obere Leitfläche des Teiles 60 unabhängig von der unteren Leitfläche des Teiles 60 verschwenkt werden kann. Hierbei können die beiden verschwenkbaren Teile ebenso wie die gemeinsam verschwenkbaren Teile 60 auf einem gemeinsamen Schwenkbolzen angeordnet sein.

Weiterhin sei darauf aufmerksam gemacht, daß bei Schleuderstreuern, vor allem mit zwei Schleuderscheiben, bei denen auf jeder Schleuderscheibe bzw. an jeder rotierenden Nahe jeweils ein kürzeres und ein längeres Wurfelement angeordnet ist, jeweils nur der Abwurfwinkel $\alpha$ bzw. die Abstreurichtung der Düngemittelpartikel nur bei dem längeren Wurfelement verändert werden muß, wenn der Schleuderstreuer zum Bestreuen von Feldrandstreifen eingesetzt wird. Bei entsprechenden Verhältnissen der Länge der Wurfelemente zueinander kann es auch erforderlich sein, daß die Abwurfwinkel $\alpha$ bei dem längeren Wurfelement in einer anderen Größenordnung als bei dem kürzen Wurfelement werden muß.

Der vorbeschriebene Schnellverschluß, mit dem Wurfelemente an den Naben der Streueinrichtung angeordnet sind, ist nur als Beispiel zu verstehen. Selbstverständlich können, ohne den Rahmen der Erfindung zu verlassen, weitere bekannte Schnellverschlüsse, wie Steck- und Schnappverschlüsse, für die Befestigung der Wurfelemente an den Naben bzw. auf den Schleuderscheiben verwendet werden.

## Patentansprüche

1. Schleuderstreuer zum Verteilen von Düngemitteln, mit einer antreibbaren Streueinrichtung, die zwei drehbare Schleuderscheiben mit Wurfelementen mit je einem inneren (12) und einem äußeren Teil (13) aufweist, wobei der innere Teil als etwa radial nach außen gerichtet untere Leitfläche (28) ausgebildet ist und der sich radial anschließende äußere Teil eine untere Leitfläche (14, 23) aufweist, die in unterschiedliche Winkelstellungen zu dem inneren Teil bringbar oder in einer festen Stellung fixiert ist,

dadurch **gekennzeichnet,**

daß die äußeren Teile der Wurfelemente (6, 22) obere Leitflächen (15, 24) aufweisen, die zum Grenzstreuen in eine derartige Stellung bringbar sind, daß der von den Wurfelementen (6, 22) abgeschleuderte Düngemittelstrom zumindest zum Teil in eine unterhalb der Normalstreurichtung liegende Richtung lenkbar ist.

**2.** Schleuderstreuer nach Anspruch 1,
dadurch **gekennzeichnet,**
daß die obere Leitfläche (24) des äußeren Teils (26) über ein Gelenk (27) mit dem inneren Teil (25) des jeweiligen Wurfelementes (22) verbunden ist.

**3.** Schleuderstreuer nach Anspruch 1 oder 2,
dadurch **gekennzeichnet,**
daß die Schleuderscheiben (57) Aussparungen (61) aufweisen, in die die nach unten verschwenkbaren und/oder nach unten weisenden äußeren Teile der Wurfelemente (58) der jeweils anderen Schleuderscheibe in der Grenzstreustellung fassen.

**4.** Schleuderstreuer nach wenigstens einem der Ansprüche 1 bis 3,
dadurch **gekennzeichnet,**
daß unterhalb der nach unten schwenkbaren und/oder weisenden äußeren Teile (55) der Wurfelemente (53) Einprägungen (56) nach unten und/oder Ausschnitte in den Schleuderscheiben (51) vorgesehen sind.

## Claims

**1.** A centrifugal broadcaster for distributing fertilisers, with a drivable broadcasting device having two rotational centrifugal discs each with an inner (12) and an outer (13) portion, the inner portion being in the form of a lower guide surface oriented roughly radially outwards, and the radially-connecting outer portion having a lower guide surface (14, 23), which may be brought into various angular positions relative to the inner portion, or is secured in a fixed position,
characterised in that
the outer portions of the throwing elements (6, 22) have upper guide surfaces (15, 24), which may be brought, for border broadcasting, into a position such that the flow of fertiliser thrown off from the throwing elements (6, 22) may be directed at least in part in a direction lying beneath that for normal fertilising.

**2.** A centrifugal broadcaster according to Claim 1,
characterised in that
the upper guide surface (24) of the outer portion (26) is connected to the inner portion (25) of the respective throwing element (22) by a joint (27).

**3.** A centrifugal broadcaster according to Claim 1 or 2,
characterised in that
the centrifugal discs (57) have openings (61) into which the downwardly-pivotable and/or downwardly-pointing portions of the throwing elements (58) of the other centrifugal disc in each case engage in the border broadcasting position.

**4.** A centrifugal broadcaster according to at least one of Claims 1 to 3,
characterised in that
there are provided, beneath the downwardly-pivotable and/ or downwardly-pointing outer portions (55) of the throwing elements (53), downward impressed portions (56) and/or cut-out sections in the centrifugal discs (51).

## Revendications

**1.** Epandeur centrifuge pour l'épandage d'engrais, avec un dispositif d'épandage susceptible d'être entraîné qui comporte deux disques centrifugeurs susceptibles de tourner avec des éléments de projection comportant chacun une partie interne (12) et une partie externe (13), la partie interne étant réalisée sous la forme d'une surface directrice inférieure (28) orientée à peu près radialement vers l'extérieur, tandis que la partie externe s'y raccordant radialement comporte une surface conductrice inférieure (14, 23) qui peut être amenée dans des positions angulaires différentes par rapport à la partie interne ou bien qui est bloquée dans une position fixe, épandeur centrifuge caractérisé en ce que les parties externes des éléments de projection (6, 22) comportent des surfaces directrices supérieures (15, 24) qui pour les épandages limites peuvent être amenées dans une position telle que le débit d'engrais projeté par les éléments de projection (6, 22) est susceptible d'être dévié tout au moins en partie selon une direction se situant au-dessous de la direction d'épandage normal.

**2.** Epandeur centrifuge selon la revendication 1, caractérisé en ce que la surface directrice supérieure (24) de la partie externe (26) est reliée par l'intermédiaire d'une articulation (27) avec la partie interne (25) de l'élément de projection (22) considéré.

**3.** Epandeur centrifuge selon la revendication 1 ou la revendication 2, caractérisé en ce que les disques centrifugeurs (57) comportent des évidements (61) dans lesquels se mettent les parties externes, susceptibles de pivoter vers le bas et/ou orientées vers le bas, des éléments de projection (58) de l'autre disque centrifugeur respectif dans la position d'épandage limite.

4. Epandeur centrifuge selon au moins une des revendications 1 à 3, caractérisé en ce qu'au-dessous des parties externes (55), susceptibles de pivoter vers le bas et/ou orientées vers le bas, des éléments de projection (53), il est prévu des empreintes (56) vers le bas et/ou des découpures dans les disques centrifugeurs (51).

## FIG.1

## FIG.2

## FIG.3

FIG.4

FIG.5

FIG.6

FIG.7

FIG. 8

FIG. 9

FIG. 10

FIG.12

FIG.11

FIG.13

FIG.14

FIG.15

▷XVII

55

51

52

55

56

▷XVII

53

54

**FIG.16**

53 55 51

56

**FIG.17**

59

61

57

57

61

60

58

60

58

60

60

59

**FIG.18**